(19) **Europäisches Patentamt European Patent Office Office européen des brevets**

(11) **EP 4 126 664 B1**

(12) **FASCICULE DE BREVET EUROPEEN**

(45) Date de publication et mention de la délivrance du brevet:
**06.05.2026 Bulletin 2026/19**

(21) Numéro de dépôt: **21716422.7**

(22) Date de dépôt: **02.04.2021**

(51) Classification Internationale des Brevets (IPC):
**B64C 25/50** *(2006.01)* **B64C 25/58** *(2006.01)*

(52) Classification Coopérative des Brevets (CPC):
**B64C 25/58; B64C 25/505**

(86) Numéro de dépôt international:
**PCT/EP2021/058803**

(87) Numéro de publication internationale:
**WO 2021/198514 (07.10.2021 Gazette 2021/40)**

(54) **ATTERRISSEUR D'AERONEF COMPRENANT UN RESSORT S'OPPOSANT A LA ROTATION ENTRE DES ELEMENTS SUPERIEUR ET INFERIEUR DE L'ATTERRISSEUR**

FLUGZEUGFAHRWERK MIT EINER FEDER, DIE DER ROTATION ZWISCHEN DEN OBEREN UND UNTEREN ELEMENTEN DES FAHRWERKES ENTGEGENGERICHTET IST

AIRCRAFT LANDING GEAR COMPRISING A SPRING OPPOSING ROTATION BETWEEN UPPER AND LOWER MEMBERS OF THE LANDING GEAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.04.2020 FR 2003337**

(43) Date de publication de la demande:
**08.02.2023 Bulletin 2023/06**

(73) Titulaire: **Safran Landing Systems 78140 Vélizy-Villacoublay (FR)**

(72) Inventeur: **ANTONI, Nicolas 77550 Moissy-Cramayel (FR)**

(74) Mandataire: **Cabinet Boettcher 5, rue de Vienne 75008 Paris (FR)**

(56) Documents cités:
**CN-A- 108 820 191 US-A- 1 855 020**
**US-A- 4 172 570 US-A1- 2017 217 574**

## Description

La présente invention se rapporte au domaine des atterrisseurs qui comprennent un élément supérieur destiné à être relié avec une structure d'aéronef et un élément inférieur portant un essieu, cet élément inférieur étant monté en translation par rapport à l'élément supérieur le long d'un axe longitudinal, un amortisseur étant agencé pour amortir des déplacements en translation de l'élément inférieur par rapport à l'élément supérieur.

### ARRIERE PLAN DE L'INVENTION

Il est connu, par exemple du document EP1786669_A1, un atterrisseur comprenant un élément supérieur (ici l'élément supérieur est un caisson principal d'atterrisseur) destiné à être relié avec une structure d'aéronef et un élément inférieur portant un essieu de l'aéronef (ici l'élément inférieur est une tige coulissante de l'atterrisseur qui coulisse à l'intérieur du caisson).

Cet élément inférieur est monté en translation par rapport à l'élément supérieur le long d'un axe longitudinal de l'élément supérieur et un amortisseur est agencé pour amortir des déplacements en translation de l'élément inférieur par rapport à l'élément supérieur.

Afin de s'opposer à la rotation de l'élément inférieur par rapport à l'élément supérieur tout en permettant la translation entre ces éléments selon l'axe longitudinal, l'atterrisseur comprend un compas.

Ce compas comporte un bras supérieur et un bras inférieur, ces bras étant articulés l'un par rapport à l'autre autour d'un axe principal du compas s'étendant dans un plan perpendiculaire à l'axe longitudinal de l'élément supérieur.

Le bras supérieur du compas est monté pivotant par rapport à l'élément supérieur autour d'un premier axe de liaison qui est parallèle vis-à-vis de l'axe principal du compas. Le bras inférieur du compas est monté pivotant par rapport à l'élément inférieur autour d'un deuxième axe de liaison qui est parallèle vis-à-vis de l'axe principal du compas. Lorsqu'un important couple de mise en rotation de l'élément inférieur par rapport à l'élément supérieur est appliqué autour dudit axe longitudinal, on constate que l'axe principal du compas peut se déformer ce qui peut présenter un risque d'endommagement du compas sous sollicitations de chargement répétées et conduire à une limitation de sa durée de vie. Les documents brevet CN108820191A et US4172570A décrivent également des atterrisseurs de l'art antérieur, ces documents divulguant un ressort hélicoïdal.

### OBJET DE L'INVENTION

Un objet de la présente invention est de fournir un atterrisseur minimisant tout ou partie des inconvénients précités.

### RESUME DE L'INVENTION

A cet effet, l'invention porte sur un atterrisseur d'aéronef comprenant un élément supérieur destiné à être relié avec une structure d'aéronef, un élément inférieur portant un essieu, ledit élément inférieur étant monté en translation par rapport à l'élément supérieur le long d'un axe longitudinal de symétrie de l'élément supérieur, un amortisseur étant agencé pour amortir des déplacements en translation de l'élément inférieur par rapport à l'élément supérieur.

Cet atterrisseur est essentiellement caractérisé en ce qu'il comprend un ressort comportant des première et seconde parties qui sont éloignées dudit axe longitudinal, la première partie du ressort étant assujettie à l'élément supérieur et la seconde partie du ressort étant assujettie à l'élément inférieur de manière à ce que lors du déplacement en translation de l'élément inférieur par rapport à l'élément supérieur, ce ressort s'oppose à toute rotation de l'élément inférieur vis-à-vis de l'élément supérieur autour dudit axe longitudinal.

Ainsi le ressort autorise la translation de l'élément inférieur de l'atterrisseur par rapport à l'élément supérieur le long de l'axe longitudinal de symétrie de l'élément supérieur tout en réalisant un couplage mécanique à rotation entre l'élément inférieur et l'élément supérieur autour de ce même axe longitudinal.

L'atterrisseur selon l'invention peut être :

- dans un premier cas, un atterrisseur à essieu non orientable (pendant le roulage de l'aéronef sur le sol) selon l'axe longitudinal par rapport à la structure de l'aéronef; ou
- dans un second cas, un atterrisseur dont l'essieu est orientable (pendant le roulage) selon l'axe longitudinal par rapport à la structure de l'aéronef (dans ce second cas, pendant le roulage, les roues portées par l'essieu sont orientables autour de l'axe longitudinal pour définir une direction de roulage).

Dans chacun de ces premier et second cas, le ressort réalise un couplage mécanique entre l'élément supérieur et l'élément inférieur tel que :

- d'une part il exerce selon l'axe longitudinal de l'élément supérieur, un couple élastique de retour de l'élément inférieur vers une position d'orientation donnée par rapport à l'élément supérieur ; et que
- d'autre part il exerce un effort élastique tendant à s'opposer au rapprochement de l'élément inférieur par rapport à l'élément supérieur selon l'axe longitudinal de l'élément.

Dans le premier cas, pendant le roulage, le ressort maintient une orientation fixe de l'essieu par rapport à la structure de l'aéronef tout en autorisant le coulissement de l'élément inférieur par rapport à l'élément supérieur (l'amortisseur ayant pour fonction d'amortir ce mouvement de coulissement).

Dans le second cas, l'orientation de l'élément inférieur et de son essieu se fait en orientant l'élément supérieur par rapport à la structure de l'aéronef. Le ressort réalise ici un couplage mécanique à rotation entre l'élément supérieur et l'élément inférieur de manière à ce que ces éléments supérieur et inférieur soient liés à rotation selon l'axe longitudinal et qu'ils soient orientés ensemble.

Dans chacun de ces cas, le ressort réalise les fonctions essentielles normalement réalisées par un compas tout en simplifiant la liaison entre les éléments supérieur et inférieur.

L'invention concerne également un aéronef équipé d'au moins un atterrisseur selon l'invention conforme à l'un quelconque des modes de réalisation d'atterrisseur décrits ci-après.

BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels :

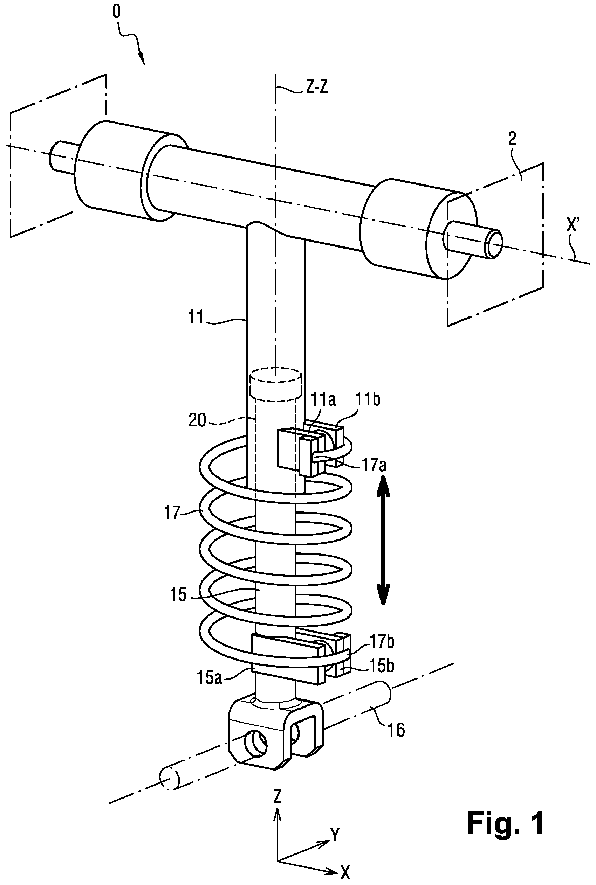

- la figure 1 est une vue schématique en perspective d'un atterrisseur selon l'invention se trouvant dans une configuration étendue dans laquelle il présente une longueur maximale (l'amortisseur 20 et le ressort 17 sont ici faiblement comprimés suivant l'axe longitudinal Z-Z) ;

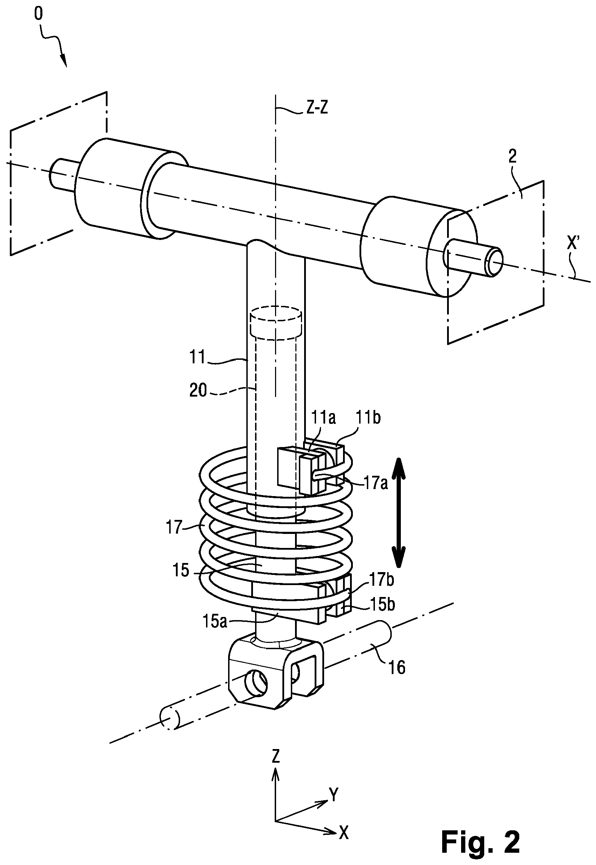

- la figure 2 est une vue de l'atterrisseur de la figure 1 alors qu'il est dans une configuration comprimée dans laquelle il présente une longueur réduite relativement à ladite longueur maximale (l'amortisseur 20 et le ressort 17 sont ici fortement comprimés suivant l'axe longitudinal Z-Z et l'essieu 16 est ici rapproché de la structure 2 de l'aéronef par translation / coulissement suivant une direction parallèle à l'axe longitudinal Z-Z) ;

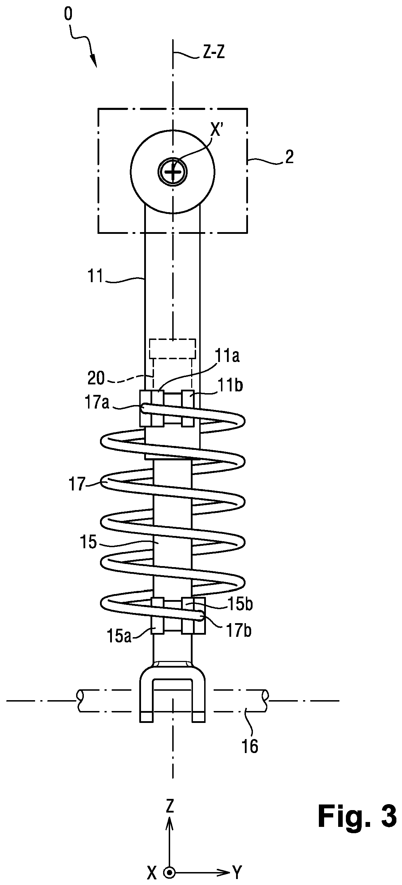

- la figure 3 est une vue de côté de l'atterrisseur de la figure 1 alors qu'il est dans sa configuration étendue, cette figure 3 illustre les positions relatives des première et seconde parties 17a, 17b du ressort 17 par rapport à l'axe longitudinal Z-Z, ces première et seconde parties 17a, 17b étant disposées pour limiter le risque de génération d'un couple parasite de mise en rotation de l'élément inférieur par rapport à l'élément supérieur lors de la compression du ressort.

DESCRIPTION DETAILLEE DE L'INVENTION

Usuellement, un aéronef comporte plusieurs atterrisseurs principaux, qui sont chacun situés à plus grande proximité de la voilure de l'aéronef que de son cockpit et un atterrisseur secondaire qui est situé à plus grande proximité du cockpit que de la voilure.

Chaque atterrisseur principal comporte généralement au moins un essieu dont l'orientation pendant le roulage de l'aéronef est généralement fixe par rapport à un plan de symétrie longitudinale de l'aéronef, cet essieu étant sensiblement perpendiculaire à ce plan de symétrie longitudinale de l'aéronef.

Un atterrisseur secondaire comporte généralement au moins un actionneur d'orientation et un essieu orientable sous l'effet de cet actionneur d'orientation. L'orientation de l'essieu permet de modifier la direction de roulage de l'aéronef sur le sol.

Préférentiellement, l'atterrisseur principal est agencé pour pouvoir supporter une charge supérieure à la charge maximale admissible par un atterrisseur secondaire, l'atterrisseur principal ayant pour fonction principale de porter l'aéronef alors que l'atterrisseur secondaire a pour fonction de porter l'aéronef et orienter l'essieu pendant le roulage.

L'atterrisseur 0 d'aéronef représenté sur les figures 1 à 3 est un atterrisseur principal, doté d'un élément supérieur 11 qui est un caisson principal et d'un élément inférieur 15 qui est une tige montée coulissante à l'intérieur du caisson.

Comme illustré sur les figures 1 à 3, l'élément supérieur 11 est destiné à être, directement ou indirectement relié à une structure d'aéronef 2 et l'élément inférieur 15, porté par l'élément supérieur 11, porte un essieu 16.

L'essieu 16 est agencé pour être équipé d'au moins une roue (non représentée) montée à rotation sur celui-ci, le plan de la roue étant perpendiculaire à un axe principal de symétrie de l'essieu.

La structure de l'aéronef 2 est ici représentée de manière simplifiée par deux zones de la structure 2 qui forment ensemble une attache de l'élément supérieur 11.

L'élément supérieur 11 qui est porté par la structure de l'aéronef est ici monté pivotant par rapport à ces zones de la structure 2 via une liaison pivot simple d'axe X'.

Comme la plupart des atterrisseurs connus, l'atterrisseur selon l'invention peut comporter une contrefiche principale (non représentée sur les figures).

Une telle contrefiche comprend généralement des bras supérieur et inférieur réunis entre eux par un coude. Ces bras supérieur et inférieur sont soit alignés entre eux pour maintenir l'atterrisseur dans un état déployé hors de la structure d'aéronef soit repliés l'un vers l'autre lorsque l'atterrisseur est dans un état rétracté à l'intérieur de la structure de l'aéronef. Une telle contrefiche peut être équipée de moyen pour la verrouiller en position lorsque les bras supérieur et inférieur sont alignés.

Un repère orthonormé formé de vecteurs normés X, Y et Z est représenté sur chacune des figures 1 à 3.

Le vecteur Y est parallèle à la direction de l'axe longitudinal de l'essieu 16.

Le vecteur Z est confondu avec une direction de l'axe longitudinal Z-Z de l'élément supérieur 11.

Le vecteur X qui est perpendiculaire aux vecteurs Y et Z et il est orienté dans une direction de roulage de la ou des roues qui équipent l'essieu 16.

Ledit axe X' formant la liaison pivot de l'atterrisseur 0 vis-à-vis de la structure 2 de l'aéronef a une direction qui est ici sensiblement parallèle à la direction du vecteur X mais il pourrait être orienté différemment en fonction du mode de liaison choisi entre l'atterrisseur 0 et la structure 2.

L'élément inférieur 15 est monté coulissant par rapport à l'élément supérieur 11 le long de l'axe longitudinal Z-Z de symétrie de l'élément supérieur 11.

En l'occurrence, l'élément inférieur 15 est ici monté coulissant à l'intérieur de l'élément supérieur 11.

Un amortisseur 20 est agencé pour amortir des déplacements en translation de l'élément inférieur 15 par rapport à l'élément supérieur 11 le long de l'axe Z-Z.

Cet amortisseur 20 exerce des efforts élastiques de retour de l'élément inférieur 15 vers une position stable de cet élément inférieur 15 par rapport à l'élément supérieur 11 et des efforts d'amortissement du mouvement de translation de l'élément inférieur 15 par rapport à l'élément supérieur 11.

L'atterrisseur 0 est ainsi déformable entre une configuration comprimée illustrée à la figure 2 dans laquelle il présente une longueur réduite (par rapport à une longueur maximale) et une configuration étendue illustrée aux figures 1 et 3 dans laquelle il présente une longueur maximale.

Lors du passage de l'atterrisseur 0 entre sa configuration étendue et sa configuration comprimée, l'élément inférieur 15 passe par ladite position stable vis-à-vis de l'élément supérieur.

L'atterrisseur selon l'invention comprend également au moins un ressort 17 comportant des première et seconde parties 17a, 17b qui sont éloignées dudit axe longitudinal Z-Z.

Ces première et seconde parties 17a, 17b du ressort sont ici des extrémités terminales du ressort 17.

La première partie 17a du ressort est assujettie à l'élément supérieur 11 (c'est-à-dire que la première partie 17a de ressort est couplée mécaniquement pour se déplacer avec cet élément supérieur 11) et la seconde partie 17b du ressort 17 est assujettie à l'élément inférieur 15 (c'est-à-dire que la seconde partie 17b de ressort est couplée mécaniquement pour se déplacer avec l'élément inférieur 15) de manière à ce que lors du déplacement en translation de l'élément inférieur 15 par rapport à l'élément supérieur 11, ce ressort 17 s'oppose à toute rotation de l'élément inférieur 15 vis-à-vis de l'élément supérieur 11 autour dudit axe longitudinal Z-Z.

Ce ressort 7 réalise un couplage mécanique à rotation entre l'élément supérieur 11 et l'élément inférieur 15, ce couplage étant élastique.

Ainsi, le ressort 17 constitue une liaison élastiquement déformable entre les éléments supérieur 11 et inférieur 15.

L'élément inférieur 15 et la seconde partie du ressort 17b se déplacent ensemble par rapport à l'élément supérieur 11, tant en translation suivant une direction de translation parallèle à l'axe Z-Z qu'en rotation autour de cette direction parallèle à l'axe Z-Z.

Ce ressort 7 est un ressort hélicoïdal s'étendant suivant un axe longitudinal du ressort qui est parallèle à l'axe longitudinal Z-Z de l'élément supérieur 11.

Cet axe longitudinal du ressort est préférentiellement confondu avec l'axe longitudinal Z-Z de l'élément supérieur.

Ce ressort est compressible le long de cet axe longitudinal du ressort 17 par rapprochement de la première partie 17a vis-à-vis de la seconde partie 17b et il présente une raideur élastique en compression suivant ledit axe longitudinal Z-Z qui est identique à sa raideur élastique en traction suivant ledit axe longitudinal Z-Z.

En d'autres termes, sur la plage de fonctionnement du ressort, lors du passage de l'atterrisseur de sa configuration étendue à sa configuration comprimée, la raideur élastique du ressort soumis à une traction tendant à écarter les première et seconde parties 17a, 17b l'une de l'autre suivant une direction parallèle à l'axe longitudinal du ressort est similaire, à une variation près fonction des caractéristiques de l'atterrisseur, ou est plus particulièrement identique, à plus ou moins 10% près, à la raideur élastique de ce ressort soumis à une compression tendant à rapprocher ces première et seconde parties du ressort l'une de l'autre suivant cette même direction.

Ce ressort hélicoïdal 17 présente plusieurs spires s'étendant entre lesdites première et seconde parties 17a, 17b, certaines des spires s'étendant autour de l'élément supérieur 11 et les autres de ces spires s'étendant autour de l'élément inférieur 15.

Ainsi, les efforts élastiques de retour de l'atterrisseur vers sa configuration étendue sont essentiellement générés par l'amortisseur 20 et minoritairement générés par le ressort 17.

Selon une direction d'observation de l'atterrisseur qui est parallèle à l'axe longitudinal Z-Z de l'élément supérieur, lesdites première et seconde parties 17a, 17b du ressort 17 apparaissent de part et d'autre de cet axe longitudinal Z-Z de l'élément supérieur 11.

En d'autres termes, les première et seconde parties 17a et 17b du ressort se trouvent préférentiellement dans un même premier plan dans lequel s'étend ledit axe longitudinal Z-Z tout en étant de part et d'autre d'un second plan dans lequel s'étend également ledit axe longitudinal Z-Z, ce second plan étant perpendiculaire audit premier plan.

Pendant le roulage, l'élément inférieur 15 coulisse le long de l'axe longitudinal Z-Z de l'élément supérieur 11 et la disposition particulière des première et seconde parties du ressort 17 par rapport à l'axe longitudinal Z-Z permet d'éviter la génération d'un couple parasite de mise en rotation de l'élément inférieur par rapport à l'élément supérieur.

Préférentiellement, comme illustré sur les figures 1 à 3, l'élément supérieur 11 comporte deux portions 11a, 11b qui s'étendent radialement par rapport à l'axe longitudinal Z-Z vers l'extérieur de cet élément supérieur 15.

Ces deux portions 11a, 11b de l'élément supérieur 11 constituent une chape habituellement utilisée pour le montage en chape d'un premier bras de compas.

De même, l'élément inférieur 15 comporte deux portions 15a, 15b qui s'étendent radialement par rapport à l'axe longitudinal Z-Z vers l'extérieur de cet élément inférieur 15.

Ces deux portions 15a, 15b de l'élément inférieur 15 constituent une chape habituellement utilisée pour le montage en chape d'un second bras de compas.

La première partie 17a du ressort est assujettie à l'élément supérieur 11 via l'une au moins de ces portions 11a, 11b de l'élément supérieur 11.

De manière similaire, la deuxième partie 17b du ressort 17 est préférentiellement assujettie à l'élément inférieur 15 via l'une au moins de ces portions de 15a, 15b de l'élément inférieur 15.

En assemblant un ressort 17 aux chapes usuellement utilisées pour relier un compas, il est donc possible d'obtenir, de manière économique, un atterrisseur selon l'invention.

Plus particulièrement, la première partie 17a du ressort est assujettie à l'élément supérieur via une première liaison rotule et la deuxième partie 17b du ressort est assujettie à l'élément inférieur via une deuxième liaison rotule.

En l'occurrence, la première liaison rotule comporte des première et seconde pièces formant une première rotule. La première pièce de la première liaison rotule est liée à encastrement avec la première partie 17a du ressort et la seconde pièce de la première liaison rotule est liée à encastrement avec l'élément supérieur 11.

De manière similaire, la deuxième liaison rotule comporte des troisième et quatrième pièces formant une seconde rotule. La troisième pièce de la deuxième liaison rotule est liée à encastrement avec la seconde partie 17b du ressort et la quatrième pièce de la deuxième liaison rotule est liée à encastrement avec l'élément inférieur 15.

Ces liaisons de type rotule contribuent à supprimer des couples / moments susceptibles d'engendrer la rotation de l'élément inférieur 15 par rapport à l'élément supérieur 11 lors du déplacement axial de l'élément inférieur 15 le long de l'axe Z-Z.

Le ressort est agencé pour générer autour de l'axe longitudinal, un couple élastique de rappel de l'élément inférieur vers une position angulaire de repos prédéterminée vis-à-vis de l'élément supérieur.

Pour cela, le ressort présente une première raideur élastique s'opposant à la rotation de l'élément inférieur vis-à-vis de l'élément supérieur autour de l'axe longitudinal.

Cette première raideur élastique est telle que, tant que le couple transmis entre l'élément supérieur 11 et l'élément inférieur 15 reste inférieur à une valeur de couple maximum prédéterminée, le ressort 17 garantit que la rotation de l'élément inférieur 15 vis-à-vis de l'élément supérieur 11 reste inférieure à un angle maximum d'orientation prédéterminé. Cet angle maximum d'orientation prédéterminé est déterminé de manière à garantir une stabilité de la direction de roulage pendant le roulage.

En cas de dépassement de ladite valeur de couple maximum prédéterminée, on peut constater un pivotement passager de l'élément inférieur 15 vis-à-vis de l'élément supérieur 11 au-delà de l'angle maximum d'orientation prédéterminé sans risque de détérioration de l'atterrisseur.

Le ressort force alors le retour de l'élément inférieur vers la position angulaire de repos prédéterminée.

Pour cela, ledit ressort 17 présente préférentiellement une raideur élastique minimale en torsion Jmin s'opposant à un pivotement de l'élément inférieur 15 par rapport à l'élément supérieur 11 autour dudit axe longitudinal Z-Z qui est donnée par l'équation :

$$\mathrm{Jmin = Cmax\ /\ |\theta1-\theta2|max,}$$

dans laquelle

Cmax est la norme du couple maximum de pivotement autorisé de l'élément inférieur 15 par rapport à l'élément supérieur 11 autour dudit axe longitudinal Z-Z (Cmax est une valeur de couple maximum prédéterminée que l'atterrisseur doit pouvoir supporter pendant son utilisation) ; et dans laquelle $|\theta1-\theta2|$max est un angle de rotation angulaire maximale autorisée de l'élément inférieur 15 par rapport à l'élément supérieur 11 autour dudit axe longitudinal Z-Z exprimé en valeur absolue.

Cette valeur $|\theta1-\theta2|$max est une valeur prédéterminée en fonction du comportement attendu de l'atterrisseur pendant son utilisation. Par exemple on pourrait choisir $|\theta1-\theta2|$max inférieur 3° d'angle, préférentiellement inférieur ou égale à 1° d'angle.

Cette raideur élastique minimale en torsion Jmin est choisie pour maintenir l'orientation angulaire de l'essieu par rapport à la structure de l'aéronef dans une plage d'efforts compatible avec un roulage stable, y compris en cas de choc sur l'élément inférieur 15 de l'atterrisseur 0.

Préférentiellement, l'amortisseur 20 présente une raideur élastique s'opposant à la déformation de l'amortisseur suivant ledit axe longitudinal Z-Z qui est plusieurs fois supérieure à une raideur élastique du ressort 17 s'opposant à la déformation du ressort suivant ce même axe longitudinal Z-Z.

L'invention permet de supprimer le compas qui relie normalement l'élément supérieur à l'élément inférieur pour le remplacer par un ressort, ce qui permet un gain de masse, une suppression d'effets indésirables de moments secondaires et un effet rappel élastique parallèle à celui exercé par l'amortisseur 20.

L'invention n'est pas limitée aux exemples décrits précédemment et elle englobe toute variante entrant dans le cadre défini par les revendications.

En particulier, l'invention englobe toutes variantes dans lesquelles la raideur de ressort, la géométrie de ses spires, son diamètre et sa longueur à vide seraient déterminées en fonction du type d'atterrisseur, de son architecture et des performances attendues.

Il est à noter que l'atterrisseur selon l'invention pourrait être un atterrisseur secondaire et dans ce cas l'élément supérieur 11 serait un tube monté pivotant, préférentiellement selon l'axe Z-Z, par rapport à un fût de l'atterrisseur, ce fût d'atterrisseur secondaire s'étendant au moins en partie à l'intérieur de ce tube tournant.

Le fût d'atterrisseur secondaire est articulé à la structure de l'aéronef pour passer d'une position déployée hors de la structure de l'aéronef à une position rétractée dans la structure de l'aéronef, de l'élément supérieur, en l'occurrence le tube serait alors relié à la structure de l'aéronef via le fût. Un actionneur serait ici utilisé pour faire pivoter l'élément supérieur par rapport au fût et ainsi manœuvrer l'orientation de l'élément inférieur et son essieu lors du roulage.

## Revendications

1. Atterrisseur (0) d'aéronef comprenant un élément supérieur (11) agencé pour être relié à une structure d'aéronef (2), un élément inférieur (15) portant un essieu (16), ledit élément inférieur étant monté en translation par rapport à l'élément supérieur le long d'un axe longitudinal (Z-Z) de l'élément supérieur (11), un amortisseur (20) étant agencé pour amortir des déplacements en translation de l'élément inférieur (15) par rapport à l'élément supérieur (11), l'atterrisseur comprenant un ressort (17) comportant des première et seconde parties (17a, 17b) qui sont éloignées dudit axe longitudinal (Z-Z), le ressort étant un ressort hélicoïdal compressible le long d'un axe longitudinal du ressort par rapprochement de la première partie (17a) vis-à-vis de la seconde partie (17b), la première partie (17a) du ressort étant assujettie à l'élément supérieur (11), **caractérisé en ce que** la seconde partie (17b) du ressort (17) est assujettie à l'élément inférieur (15) de manière à ce que lors du déplacement en translation de l'élément inférieur (15) par rapport à l'élément supérieur (11) ce ressort (17) s'oppose à toute rotation de l'élément inférieur (15) vis-à-vis de l'élément supérieur (11) autour de l'axe longitudinal (Z-Z), le ressort hélicoïdal s'étendant en partie autour de l'élément supérieur et en partie autour de l'élément inférieur, la première partie du ressort étant assujettie à l'élément supérieur via une première liaison rotule et la deuxième partie du ressort étant assujettie à l'élément inférieur via une deuxième liaison rotule.

2. Atterrisseur d'aéronef selon la revendication 1, dans lequel ledit ressort (17) présente une raideur élastique en compression suivant ledit axe longitudinal (Z-Z).

3. Atterrisseur d'aéronef selon la revendication 2, dans lequel ledit ressort présente également une raideur élastique en traction suivant ledit axe longitudinal (Z-Z), ladite raideur élastique en compression du ressort étant identique à ladite raideur élastique en traction du ressort.

4. Atterrisseur d'aéronef selon l'une quelconque des revendications 2 ou 3, dans lequel ledit amortisseur (20) présente une raideur élastique s'opposant à la déformation de l'amortisseur suivant ledit axe longitudinal (Z-Z) qui est plusieurs fois supérieure à ladite raideur élastique en compression du ressort suivant ledit axe longitudinal (Z-Z) .

5. Atterrisseur d'aéronef selon l'une quelconque des revendications 1 à 4, dans lequel ledit ressort hélicoïdal présente plusieurs spires s'étendant entre lesdites première et seconde parties du ressort et dans lequel lorsque l'atterrisseur est observé suivant une direction d'observation parallèle à l'axe longitudinal (Z-Z) de l'élément supérieur, lesdites première et seconde parties du ressort apparaissent de part et d'autre de cet axe longitudinal (Z-Z) de l'élément supérieur (11).

6. Atterrisseur d'aéronef selon l'une quelconque des revendications 1 à 6, dans lequel les première et seconde parties du ressort sont des extrémités terminales du ressort.

7. Atterrisseur d'aéronef selon l'une quelconque des revendications 1 à 7, dans lequel la première partie du ressort est assujettie à l'élément supérieur via une portion de l'élément supérieur qui s'étend radialement par rapport à l'axe longitudinal (Z-Z) de l'élément supérieur vers l'extérieur de cet élément supérieur et dans lequel la deuxième partie du ressort est assujettie à l'élément inférieur via une portion de l'élément inférieur qui s'étend radialement par rapport à l'axe longitudinal (Z-Z) de l'élément supérieur vers l'extérieur de cet élément inférieur.

8. Atterrisseur d'aéronef selon l'une quelconque des revendications 1 à 7, dans lequel :

　　- la première liaison rotule comporte des première et seconde pièces formant une première rotule, la première pièce de la première liaison rotule étant liée à encastrement avec la première partie (17a) du ressort et la seconde pièce de la première liaison rotule étant liée à encastrement avec l'élément supérieur (11) ;
- la deuxième liaison rotule comporte des troisième et quatrième pièces formant une seconde rotule, la troisième pièce de la deuxième liaison rotule étant liée à encastrement avec la seconde partie (17b) du ressort et la quatrième pièce de la deuxième liaison rotule étant liée à encastrement avec l'élément inférieur (15).

9. Atterrisseur d'aéronef selon l'une quelconque des revendications 1 à 8, dans lequel ledit ressort présente une raideur élastique minimale en torsion Jmin s'opposant à un pivotement de l'élément inférieur (15) par rapport à l'élément supérieur (11) autour dudit axe longitudinal (Z-Z), cette raideur élastique minimale en torsion étant donnée par l'équation :

$$\text{Jmin = Cmax / } \left|\theta 1 - \theta 2\right| \text{max,}$$

dans laquelle

Cmax est la norme d'un couple maximum de pivotement autorisé de l'élément inférieur (15) par rapport à l'élément supérieur (11) autour dudit axe longitudinal (Z-Z), Cmax étant une valeur prédéterminée ; et dans laquelle |θ1-θ2|max est un angle de rotation angulaire maximale autorisée de l'élément inférieur (15) par rapport à l'élément supérieur (11) autour dudit axe longitudinal (Z-Z) exprimé en valeur absolue.

10. Atterrisseur d'aéronef selon l'une quelconque des revendications 1 à 9, dans lequel l'atterrisseur est un atterrisseur principal d'aéronef, l'élément supérieur étant un caisson principal de l'atterrisseur et l'élément inférieur étant une tige de l'atterrisseur montée coulissante à l'intérieur du caisson.

11. Atterrisseur d'aéronef selon l'une quelconque des revendications 1 à 9, dans lequel l'atterrisseur est un atterrisseur secondaire d'aéronef, l'élément supérieur étant un tube monté pivotant par rapport à un fût de l'atterrisseur, ce fût de l'atterrisseur s'étendant au moins en partie à l'intérieur du tube tournant.

12. Aéronef comprenant au moins un atterrisseur selon l'une quelconque des revendications 1 à 11.

**Patentansprüche**

1. Luftfahrzeug-Fahrwerk (0) umfassend ein oberes Element (11), das dafür ausgelegt ist, mit einer Luftfahrzeugstruktur (2) verbunden zu sein, ein unteres Element (15), das eine Achse (16) trägt, wobei das untere Element in Bezug auf das obere Element entlang einer Längsachse (Z-Z) des oberen Elements (11) translatorisch verschiebbar angebracht ist, wobei ein Dämpfer (20) dafür ausgelegt ist, Translationsbewegungen des unteren Elements (15) in Bezug auf das obere Element (11) zu dämpfen, wobei das Fahrwerk eine Feder (17) umfasst, welche einen ersten und einen zweiten Abschnitt (17a, 17b) enthält, die von der Längsachse (Z-Z) beabstandet sind, wobei es sich bei der Feder um eine Schraubenfeder handelt, die entlang einer Längsachse der Feder durch Annäherung des ersten Abschnitts (17a) relativ zu dem zweiten Abschnitt (17b) komprimierbar ist, wobei der erste Abschnitt (17a) der Feder an dem oberen Element (11) befestigt ist, **dadurch gekennzeichnet, dass** der zweite Abschnitt (17b) der Feder (17) derart an dem unteren Element (15) befestigt ist, dass während der translatorischen Verschiebebewegung des unteren Elements (15) in Bezug auf das obere Element (11) die Feder (17) jedweder Drehbewegung des unteren Elements (15) in Bezug auf das obere Element (11) um die Längsachse (Z-Z) herum entgegenwirkt, wobei sich die Schraubenfeder teilweise um das obere Element herum und teilweise um das untere Element herum erstreckt, wobei der erste Abschnitt der Feder über eine erste Kugelgelenkverbindung an dem oberen Element befestigt ist und der zweite Abschnitt der Feder über eine zweite Kugelgelenkverbindung an dem unteren Element befestigt ist.

2. Luftfahrzeug-Fahrwerk nach Anspruch 1, wobei die Feder (17) eine elastische Drucksteifigkeit entlang der Längsachse (Z-Z) aufweist.

3. Luftfahrzeug-Fahrwerk nach Anspruch 2, wobei die Feder auch eine elastische Zugfestigkeit entlang der Längsachse (Z-Z) aufweist, wobei die elastische Drucksteifigkeit der Feder gleich groß ist wie die elastische Zugsteifigkeit der Feder.

4. Luftfahrzeug-Fahrwerk nach einem der Ansprüche 2 oder 3, wobei der Dämpfer (20) eine elastische Steifigkeit aufweist, welche einer Verformung des Dämpfers entlang der Längsachse (Z-Z) entgegenwirkt und um ein Mehrfaches größer ist als die elastische Drucksteifigkeit der Feder entlang der Längsachse (Z-Z).

5. Luftfahrzeug-Fahrwerk nach einem der Ansprüche 1 bis 4, wobei die Schraubenfeder mehrere Windungen aufweist, die sich zwischen dem ersten und dem zweiten Abschnitt der Feder erstrecken, und wobei, wenn das Fahrwerk gemäß einer sich parallel zu der Längsachse (Z-Z) des oberen Elements erstreckenden Beobachtungsrichtung betrachtet wird, der erste und der zweite Abschnitt der Feder zu beiden Seiten der Längsachse (Z-Z) des oberen Elements (11) sichtbar sind.

**6.** Luftfahrzeug-Fahrwerk nach einem der Ansprüche 1 bis 6, wobei es sich bei dem ersten und dem zweiten Abschnitt der Feder um die Endabschnitte der Feder handelt.

**7.** Luftfahrzeug-Fahrwerk nach einem der Ansprüche 1 bis 7, wobei der erste Abschnitt der Feder über einen Teilbereich des oberen Elements, der sich in Bezug auf die Längsachse (Z-Z) des oberen Elements radial aus diesem oberen Element vorstehend erstreckt, an dem oberen Element befestigt ist, und wobei der zweite Abschnitt der Feder über einen Teilbereich des unteren Elements, der sich in Bezug auf die Längsachse (Z-Z) des oberen Elements radial aus diesem unteren Element vorstehend erstreckt, an dem unteren Element befestigt ist.

**8.** Luftfahrzeug-Fahrwerk nach einem der Ansprüche 1 bis 7, wobei:

- die erste Kugelgelenkverbindung ein erstes und ein zweites Teil enthält, die einen ersten Kugelkopf bilden, wobei das erste Teil der ersten Kugelgelenkverbindung fest mit dem ersten Abschnitt (17a) der Feder verspannt ist, und das zweite Teil der ersten Kugelgelenkverbindung fest mit dem oberen Element (11) verspannt ist;
- die zweite Kugelgelenkverbindung ein drittes und ein viertes Teil enthält, die einen zweiten Kugelkopf bilden, wobei das dritte Teil der zweiten Kugelgelenkverbindung fest mit dem zweiten Abschnitt (17b) der Feder verspannt ist, und das vierte Teil der zweiten Kugelgelenkverbindung fest mit dem unteren Element (15) verspannt ist;

**9.** Luftfahrzeug-Fahrwerk nach einem der Ansprüche 1 bis 8, wobei die Feder eine minimale elastische Torsionssteifigkeit Jmin aufweist, welche einer Verdrehung des unteren Elements (15) in Bezug auf das obere Element (11) um die Längsachse (Z-Z) herum entgegenwirkt, wobei diese minimale elastische Torsionssteifigkeit durch folgende Gleichung gegeben ist:

$$Jmin = Cmax / |\theta 1 - \theta 2|max,$$

wobei

Cmax die Norm für ein maximal zulässiges Verdrehmoment des unteren Elements (15) in Bezug auf das obere Element (11) um die Längsachse (Z-Z) herum ist, wobei Cmax ein vorbestimmter Wert ist, und wobei

$|\theta 1 - \theta 2|max$ ein maximal zulässiger Winkel für die Winkeldrehung des unteren Elements (15) in Bezug auf das obere Element (11) um die Längsachse (Z-Z) herum ist, welcher als Absolutwert angegeben ist.

**10.** Luftfahrzeug-Fahrwerk nach einem der Ansprüche 1 bis 9, wobei das Fahrwerk ein Luftfahrzeug-Hauptfahrwerk ist, wobei es sich bei dem oberen Element um ein Hauptgehäuse des Fahrwerks und bei dem unteren Element um eine innerhalb des Gehäuses verschiebbar angebrachte Fahrwerksstange handelt.

**11.** Luftfahrzeug-Fahrwerk nach einem der Ansprüche 1 bis 9, wobei das Fahrwerk ein Luftfahrzeug-Hilfsfahrwerk ist, wobei es sich bei dem oberen Element um ein Rohr handelt, das drehbar in Bezug auf einen Schaft des Fahrwerks angebracht ist, wobei sich dieser Fahrwerksschaft zumindest teilweise innerhalb des Drehrohrs erstreckt.

**12.** Luftfahrzeug, umfassend zumindest ein Fahrwerk nach einem der Ansprüche 1 bis 11.

**Claims**

**1.** An aircraft undercarriage (0) comprising an upper element (11) arranged to be connected to an aircraft structure (2), a lower element (15) carrying an axle (16), said lower element being mounted to be movable in translation relative to the upper element along a longitudinal axis (Z-Z) of the upper element (11), and a shock absorber (20) arranged to damp movements in translation of the lower element (15) relative to the upper element (11), the undercarriage includes a spring (17) having first and second portions (17a, 17b) that are spaced apart from said longitudinal axis (Z-Z), the spring is a helical spring that is compressible along a longitudinal axis of the spring by moving the first portion (17a) closer to the second portion (17b), the first portion (17a) of the spring being secured to the upper element (11), **characterized in that** the second portion (17b) of the spring (17) being secured to the lower element (15) in such a manner that during movement in translation of the lower element (15) relative to the upper element (11) the spring (17) opposes any turning of the lower element (15) relative to the upper element (11) about the longitudinal axis (Z-Z), the helical spring extending partially about the upper element (11) and partially about the lower element (15), the first portion of the spring being secured to the upper element via a first ball-joint connection and the second portion of the spring being secured to the lower element via a second ball-joint connection.

2. An aircraft undercarriage according to claim 1, wherein said spring (17) presents elastic stiffness in compression along said longitudinal axis (Z-Z).

3. An aircraft undercarriage according to claim 2, wherein said spring also presents elastic stiffness in traction along said longitudinal axis (Z-Z), said elastic stiffness in compression of the spring being identical to said elastic stiffness in traction of the spring.

4. An aircraft undercarriage according to claim 2 or claim 3, wherein the shock absorber (20) presents elastic stiffness opposing deformation of the shock absorber along said longitudinal axis (Z-Z) that is several times greater than said elastic stiffness in compression of the spring along said longitudinal axis (Z-Z).

5. An aircraft undercarriage according to any one of claims 1 to 4, wherein said helical spring presents a plurality of turns extending between said first and second portions of the spring, and wherein, when the undercarriage is observed in an observation direction that is parallel to the longitudinal axis (Z-Z) of the upper element, said first and second portions of the spring appear on opposite sides of the longitudinal axis (Z-Z) of the upper element (11).

6. An aircraft undercarriage according to any one of claims 1 to 5, wherein the first and second portions of the spring are terminal ends of the spring.

7. An aircraft undercarriage according to any one of claims 1 to 6, wherein the first portion of the spring is secured to the upper element via a portion of the upper element that projects outwards from the upper element, radially relative to the longitudinal axis (Z-Z) of the upper element, and wherein the second portion of the spring is secured to the lower element via a portion of the lower element that projects outwards from the lower element, radially relative to the longitudinal axis (Z-Z) of the upper element.

8. An aircraft undercarriage according to any one of claims 1 to 7, wherein:

   · the first ball joint connection comprises first and second parts forming a first ball joint, the first part of the first ball joint connection being fixedly connected to the first portion (17a) of the spring, and the second part of the first ball joint connection being fixedly connected to the upper element (11); and
   · the second ball joint connection comprises third and fourth parts forming a second ball joint, the third part of the second ball joint connection being fixedly connected to the second portion (17b) of the spring, and the fourth part of the second ball joint connection being fixedly connected to the lower element (15).

9. An aircraft undercarriage according to any one of claims 1 to 8, wherein said spring presents a minimum value Jmin of elastic stiffness in twisting opposing pivoting of the lower element (15) relative to the upper element (11) about said longitudinal axis (Z-Z), the minimum elastic stiffness in twisting being given by the following equation:

$$Jmin = Cmax / |\theta 1-\theta 2|max$$

   · in which Cmax is the magnitude of a maximum authorized pivoting torque for the lower element (15) relative to the upper element (11) about said longitudinal axis (Z-Z), Cmax being a predetermined value; and
   · in which $|\theta 1-\theta 2|max$ is a maximum authorized angle of rotation for the lower element (15) relative to the upper element (11) about said longitudinal axis (Z-Z) expressed as its absolute value.

10. An aircraft undercarriage according to any one of claims 1 to 9, wherein the undercarriage is an aircraft main undercarriage, the upper element being a main strut leg of the undercarriage and the lower element being an undercarriage rod slidably mounted to slide inside the strut leg.

11. An aircraft undercarriage according to any one of claims 1 to 9, wherein the undercarriage is an aircraft nose undercarriage, the upper element being a tube that is pivotally mounted relative to a shaft of the undercarriage, the shaft of the undercarriage extending at least in part inside the turnable tube.

12. An aircraft including at least one undercarriage according to any one of claims 1 to 11.

**Fig. 1**

**Fig. 2**

**Fig. 3**

**EP 4 126 664 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1786669 A1
- CN 108820191 A
- US 4172570 A